# EUROPEAN PATENT APPLICATION

(11) **EP 2 604 428 A1**
(43) Date of publication of application: **19.06.2013**
(21) Application number: 11816132.2
(22) Date of filing: 09.02.2011
(51) Int. Cl.: B32B 9/04, E04C 2/04, E04C 2/34

(54) **METHOD FOR PRODUCING A THIN MULTI-SHEET SLAB OF NATURAL STONE**

(30) Priority: 09.08.2010 ES 201001065
(71) Applicant: Benicantil Marmoles, S.A., 03640 Alicante (ES)
(72) Inventor: SANTO SANCHEZ, Juan Antonio, E-03640 Alicante (ES); GONZALEZ PENELLA, Vicente, E-036540 Alicante (ES); GUILLEM LOPEZ, Celia, E-03640 Alicante (ES); LOPEZ BUENDIA, Angel, E-03640 Alicante (ES)
(74) Representative: Tari Lazaro, Aida
(86) International application number: PCT/ES2011/070086
(87) International publication number: WO 2012/020155

(57) **Abstract**

Manufacturing procedure for a multi-sheet product starting from sheets consisting exclusively of natural stone, joined by means of an adhesive component. The combination of sheets of high and low quality natural stone makes it possible to obtain exclusively high quality products with large formats and reduced thicknesses, and it also allows for an increase in the production of high quality products obtained starting from a single sheetof high quality original natural stone (figure 2).

The innovation of the manufacturing procedure lies in the machining of grooves, the adhesion of laminas, the curing of the resin, and the splitting. By means of the proposed process (figure 1) it is possible to obtain multi-laminated products (figure 3) of reduced thickness and large format with high mechanical performance and durability, and which are easy to lay on site.

## Description

### OBJECT

The purpose of this invention is to describe a manufacturing procedure for obtaining a construction material of the type multi-sheet slab of natural stone of reduced thickness.

### BACKGROUND OF THE INVENTION

In the construction sector use is made of materials and products of a very different nature depending on the performance and functionalities that are needed, along with their economic cost, as a facing for partitions and walls. In particular, a material that is much used as a facing is natural stone, due primarily to its physical and aesthetic properties, as well as to the fact of being unique on account of its natural origin. So, given that there exists a large quantity of varieties of natural stone, this allows for a wide range of products to be offered in terms of finishings and aesthetic appearance.

In spite of the great advantages of natural stone, one of the drawbacks in its use as a facing for buildings is its cost compared to other types of products, since it is obtained from a limited natural source. Also, another disadvantage lies in the mechanical performance of the material, which makes it necessary to resort to certain thicknesses of pieces in order to reduce the risk of breakage. In addition to an excessive consumption of raw material, this also implies a considerable weight of the pieces, which adversely affects the handling and transport costs.

In order to solve these drawbacks, a large number of production processes, systems and products associated with this problem have been patented in recent decades. Nevertheless, the shortcomings have not been wholly overcome. Stated below are a series of solutions related to the problem raised here.

A marble slab coloured in order to overcome the limitation on original colour so as to make the final product translucent; while the present patent concerns a single stone material with different qualities.

Certain inventions develop products comprising two slabs of different material, specifically, one of natural stone and the other of a different material (such as ceramic, limestone, polyurethane, etc.), and the former can even include a strengthening stage; on the contrary, the present patent uses the same material with different qualities and there is no reinforcing covering as such, solely an adhesion which has a different manufacturing process since just two pieces are being joined.

On the other hand, there exist processes which describe a product made of stone formed from two slabs of the same material, but with different aesthetic qualities and identical dimensions. Nevertheless, the present patent presents a manufacturing procedure for a multi-sheetproduct based on products of the same material with different quality but with dimensions that can be different. Also, the gluing of the sheets incorporates some groves for stiffening and strengthening the adhesion of the sheets in order to facilitate their laying.

Unlike other inventions, the present patent concerns a productive process where sets of pieces are obtained by combining products of good and bad quality, and also grooving operations are carried out consisting of a manufacturing process for various sets of adhered pieces which are cut by means of a process of splitting, where the vertical cut of them is made by mechanical means in order to later on divide the set of pieces.

### DESCRIPTION OF THE INVENTION

The invention consists of a manufacturing procedure for a multi-sheet slab for use in construction based on natural stone.

The multi-sheet slab comprises three layers, an upper one with one or several sheets of low quality stone, a central layer comprised of a sheet of high quality stone of thickness approximately double that of the final product, and a lower layer comprised of one or several sheets of low quality stone.

Although, as has been explained, there exist patents which describe different manufacturing procedures for similar products, the present one in particular contributes the following advantages to the state of the art:
- The adhesion of the sheets making up the slab is stiffened and strengthened.
- The finished product is easier to lay.
- It is easier to manufacture.
- The cost per unit of final product is reduced, since there are few breakages of the pieces.

### GENERAL DESCRIPTION OF THE PROCEDURE

Once the blocks of stone have been received, it is possible by means of a cutting operation to obtain essentially flat pieces which will present different qualities, with a set of sheets classified by quality being obtained as a result, having the necessary format and thickness.

Once the classification has been carried out, some grooves are machined in the two faces of each lamina, so that they have a suitable shape, arrangement and geometry.

Once the operation of machining the grooves is completed, an adhesive is then applied to the surface of the corresponding face of each sheet using a bi-component resin (of the type epoxy, polyurethanes, unsaturated polyester, etc), the sheets are then glued together and the resulting multi-sheet slab is then cured by microwave technology.

In order to end the process, the initial multi-sheet slab is then cut into two parts using a splitting machine.

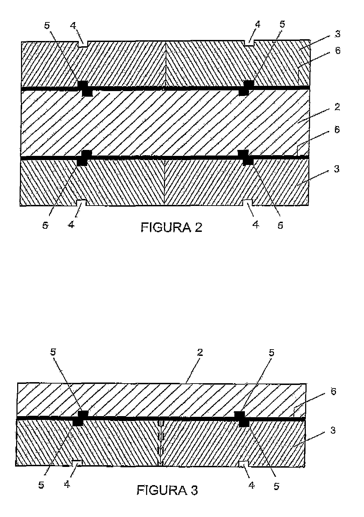

Prior to proceeding to cutting the multi-sheet slab, this slab consists of the following pieces, as can be seen in Figure 2:
a) One or more sheets of low quality stone (3), in the upper part.
b) A layer of adhesive (6).
c) A central layer of high quality stone (2).
d) A layer of adhesive (6).
e) One or more sheets of low quality stone (3), in the lower part.

After the splitting, the multi-sheet slab will consist of the following pieces, as can be seen in Figure 3 :
a) A central layer of high quality stone (2).
b) A layer of adhesive (6).
c) One or more sheets of low quality stone (3), in the lower part.

As shown in Figure 2, all the sheets will have grooves on both faces so that, as well as successfully facilitating the adhesion among sheets; the laying of the multi-sheet product on site is also facilitated.

Finally, via conventional processes of surface treatment and finishing (calibrating, polishing, bevelling of edges, etc.) the final product is obtained ready for marketing.

### SUMMARY DESCRIPTION OF THE PROCEDURE

1.1) Cutting of blocks, obtaining pieces with essentially flat surfaces.
1.2) Classification of the pieces obtained according to quality criteria.
1.3) Machining of the outer (4) and inner (5) grooves specified in the production process.
1.4) Application of bi-component epoxy type resin adhesive (6) to the corresponding face, for the formation of the multi-sheet slab as can be seen in Figure 2.
1.5) Gluing of the three layers making up the multi-sheet slab, according to the following order:
   - One or more sheets of low quality stone (3), laid on the same plane, one alongside the other in the upper part of the slab.
   - A central sheet of high quality stone (2).
   - One or more sheets of low quality stone (3), laid on the same plane, one alongside the other in the lower part of the slab.
1.6) Thermal and/or chemical curing of the multi-sheet slab.
1.7) Splitting or cutting of the multi-sheet slab, obtaining two pieces with materials of different quality.
1.8) Surface treatments.
1.9) Finishing treatment giving rise to a marketable final product.

### DESCRIPTION OF DRAWINGS

In order to complement the description of this invention and with the aim of facilitating an understanding of its characteristics, a series of figures are attached in which, in an illustrative and basis without being limiting, the following figures have been represented:
(1) Flow diagram of the production process.
   (1.1) Cutting of blocks.
   (1.2) Classification by qualities.
   (1.3) Machining of outer and inner grooves.
   (1.4) Application of adhesive.
   (1.5) Gluing of the laminas.
   (1.6) Curing of resins.
   (1.7) Splitting.
   (1.8) Surface treatments.
   (1.9) Finishing treatment.
(2) Sheet of high quality large format natural stone.
(3) Sheet of low quality natural stone.
(4) Outer grooving.
(5) Inner grooving.
(6) Adhesive.

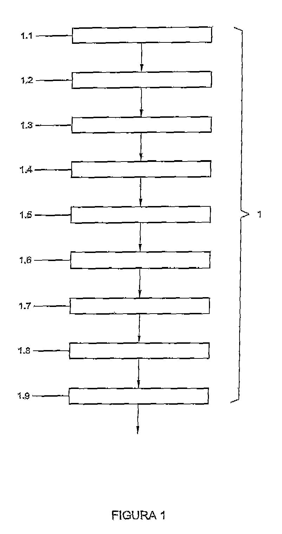

Figure 1 is a flow diagram of the main steps of the production process.

Figure 2 is a diagram showing the composition of the multi-sheet slab in the step prior to splitting, composed of three layers. The upper and lower layers are sheets of low quality stone and the central layer is a sheet of high quality stone.

Figure 3 is a diagram of the final product once the cut has been made.

### PREFERRED EMBODIMENT OF THE INVENTION

In relation to the aforementioned figures, described below is the preferred embodiment of the manufacturing procedure for a construction product of the type multi-sheet slab of natural stone with reduced thickness.

Before commencing the manufacturing procedure of the multi-sheet slab, the blocks of stone are first received in the manufacturing plant. These blocks are cut to obtain sheets of different qualities, which are then classified by quality, and with the necessary format and thickness. The detailed manufacturing procedure consists of the following steps.
1.1) Cutting of blocks, obtaining pieces with essentially flat surfaces.
1.2) Classification of the pieces obtained according to quality criteria.
1.3) Machining of the outer (4) and inner (5) grooves specified in the production process. The outer grooves (4), made on the outer surface of low quality sheets(3), have the function of facilitating the laying of the multi-sheet slabs.
   The inner grooves (5), made on low quality sheets(3), have the function of facilitating the gluing between the laminas. These inner grooves (5) are made on both faces of the high quality natural stone sheets(2).
1.4) Application of bi-component epoxy type resin adhesive (6) to the corresponding face, for the formation of the multi-sheet slab.
1.5) Gluing of the three layers making up the multi-sheet slab, according to the following order:
   - One or more sheets of low quality stone (3), laid on the same plane, one alongside the other in the upper part of the slab.
   - A central sheet of high quality stone (2).
   - One or more sheets of low quality stone (3), laid on the same plane, one alongside the other in the lower part of the slab.
1.6) Thermal and/or chemical curing of the multi-sheet slab.
1.7) Splitting or cutting of the multi-sheet slab, obtaining two pieces with materials of different quality.
1.8) Surface treatments.
1.9) Finishing treatment giving rise to a marketable final product.

Having sufficiently described the nature of this invention, along with a practical application thereof, it only remains to add that the procedure for obtaining the sheets that has been described is susceptible to modifications, always provided they do not substantially affect the characteristics that are claimed below.

## Claims

1. Manufacturing procedure for a multi-sheet slab of natural stone of reduced thickness and essentially flat, coming from blocks of stone material, cut into sheets of different qualities and geometries.
The multi-sheet slab comprises three layers, an upper one with one or several sheets of low quality stone (3), a central layer comprised of a sheet of high quality stone (2) of thickness approximately double that of the final product, and a lower layer comprised of one or several sheetsof low quality stone (3).
The procedure is **characterised in that** it comprises the following steps:
1.1) Cutting of blocks, obtaining pieces with essentially flat surfaces.
1.2) Classification of the pieces obtained.
1.3) Machining of the outer (4) and inner (5) grooves specified in the production process.
1.4) Application of bi-component resin adhesive (6) (epoxy, polyurethanes, unsaturated polyester, etc), for the formation of the multi-sheetslab.
1.5) Gluing of the three layers making up the multi-sheet slab, according to the following order:
- One or more sheets of low quality stone (3), laid on the same plane, one alongside the other in the upper part of the slab.
- A central sheet of high quality stone (2).
- One or more sheets of low quality stone (3), laid on the same plane, one alongside the other in the lower part of the slab.
1.6) Curing of the resulting multi-sheet slab by means of hardening of the bi-component adhesive, at a suitable temperature.
1.7) Splitting or cutting of the multi-sheet slab, obtaining two pieces with materials of different quality.
1.8) Surface treatments.
1.9) Finishing treatment giving rise to a marketable final product.
